# EUROPEAN PATENT SPECIFICATION

(11) **EP 2 238 224 B1**
(45) Date of publication and mention of the grant of the patent: **07.08.2013**
(21) Application number: 09701774.3
(22) Date of filing: 13.01.2009
(51) Int. Cl.: C10L 1/18, C11C 3/00, C10L 1/02

(54) **METHOD FOR BIODIESEL PRODUCTION FROM FATS AND OILS**
VERFAHREN ZUR HERSTELLUNG VON BIODIESEL AUS FETTEN UND ÖLEN
PROCÉDÉ DE PRODUCTION DE BIODIESEL À PARTIR DE MATIÈRES GRASSES

(30) Priority: 14.01.2008 CZ 20080018; 30.06.2008 CZ 20080411
(43) Date of publication of application: 13.10.2010
(73) Proprietor: Tomas Bata University In Zlín, 76001 Zlín (CZ)
(72) Inventor: KOLOMAZNÍK, Karel, 76005 Zlín (CZ); KLEIN, Karel, 76001 Zlín (CZ); VASEK, Vladimír, 76001 Zlín (CZ); JANÁCOVÁ, Dagmar, 76001 Zlín (CZ); JELÍNEK, Milos, 50008 Hradec Králové (CZ); UHLÍROVÁ, Michaela, 76001 Zlín (CZ); MYNARÍK, Alois, 76502 Otrokovice (CZ)
(74) Representative: Kreizlova, Dana
(86) International application number: PCT/CZ2009/000001
(87) International publication number: WO 2009/089802

(56) References cited:
- EP-A- 1 870 446
- WO-A-2004/031119
- WO-A-2006/029655
- SCHUCHARDT U ET AL: "TRANSESTERIFICATION OF VEGETABLE OILS: A REVIEW" JOURNAL OF THE BRAZILIAN CHEMICAL SOCIETY, SAO PAULO, BR, vol. 9, no. 3, 1 January 1998 (1998-01-01), pages 199-210, XP009008364 ISSN: 0103-5053
- KULKARNI M G ET AL: "Waste cooking oil - an economical source for biodiesel: A Review" INDUSTRIAL & ENGINEERING CHEMISTRY RESEARCH, AMERICAN CHEMICAL SOCIETY, US, vol. 45, 1 January 2006 (2006-01-01), pages 2901-2913, XP003023468 ISSN: 0888-5885 [retrieved on 2006-03-24]
- CERCE, T., PETER, S., WEIDNER, E.: "BIODIESEL-TRANSESTERIFICATION OF BIOLOGICAL OILS WITH LIQUID CATALYSTS: THERMODYNAMIC PROPERTIES OF OIL-METHANOL-AMINE MIXTURES" IND.ENG.CHEM.RES., [Online] vol. 2005, no. 44(25), 12 August 2005 (2005-08-12), pages 9535-9541, XP002525550 WASHINGTON

## Description

### Field of the invention

The invention concerns a method for biodiesel production from waste oils and fats, especially waste fats of animal origin.

### Background of the invention

Nowadays, the absolute majority of biodiesel production is based on reesterification of vegetable oils by methyl or ethyl alcohol under catalysis of inorganic bases.

Vegetable oils are processed by reesterification catalyzed by basic compounds of alkaline metals and earth metals. After termination of the reesterification reaction, the reaction blend is neutralized by carbon dioxide under intensive stirring. After cooling, the reaction blend is separated into lighter biodiesel and heavier glycerin phases. The main disadvantage of biodiesel produced from high quality vegetable oils is its high price, which is more than double the price of common diesel fuel. The relatively high costs in biodiesel production result from high prices of the vegetable oil feedstock.

However, biodiesel can be made from other feedstocks, such as yellow grease (e.g. trap grease) or animal fats (beef tallow, waste pork lard, tannery fats, etc.). The prices of the said feedstocks are many times lower compared to pure vegetable oils and sometimes even negative when the low quality fat is burdened with disposal charges. A disadvantage of waste fats and oils is the necessity of their pre-processing during which undesirable components that might negatively affect the final properties of the produced biodiesel must be removed. The majority of waste fats and oils contain free fatty acids that, if not removed, neutralize the inorganic base catalysts and thereby decrease their activity. Furthermore, the resulting alkali soaps significantly complicate the separation process and often make it practically infeasible. Therefore the free fatty acids have to be esterified by alcohol. The reaction is in most cases catalyzed by strong inorganic acids (sulfuric, phosphoric). After esterification, the acid catalysts are neutralized and the resulting inorganic salts increase the ash content in the final products, especially the glycerin phase, which significantly decreases the value of produced glycerin and thereby its price. To meet the glycerin commercial quality standards, the glycerin phase requires desalting which leads to an increase in production costs. If waste tannery fats are used as the input feedstock, there is also a considerable amount of ash, moisture and proteins in addition to the free fatty acid content.

Other esterification method is based on the use of high temperature (240°C) and pressure (9 MPa) when the esterification reaction runs directly. The demanding pre-processing of acid waste fats can completely eliminate the main economical advantage that lies in low prices of the above mentioned input feedstocks; in other words - additional production and operating costs in current situation complicate the implementation of biodiesel production from waste acid fats and oils into industrial practice.

The invention according to WO 2004031119 relates to a method for obtaining or producing fatty acid esters of monovalent alcohols by alcoholysis. The invention particularly relates to a method involving the reaction of fat and/or oil of biological origin with a monovalent alcohol in the presence of a catalyst, said catalyst being selected from amongst compounds having an imino group or a guanidine group and butylamine, tertiary or quaternary amines, wherein the tertiary amines have at least one OH group or NH2 group and wherein amino acids and amino acid derivatives are excluded. Higher yields of fatty acid esters of monovalent alcohols can be obtained with the aid of the inventive method.

The invention according to WO 2006029655 relates to a method for producing fatty acid esters from fats and oils of biological origin by means of transesterification with monovalent alcohols in the presence of basic catalysts. The catalysts used are salts formed by a basic organic compound and carbonic acid.

The invention according to EP 1870446 relates to a method for transesterification of triglycerides with monovalent alcohols, whereas the substitution proceeds in the presence (a) of basic catalysts (activators) and (b) of transfer phase catalyst, which is selected from the group of benzyltrialkylammonium salt and trisalkylmethylammonium salt of the formula [NR5 R6 R7 CH3]+ [X]- where the hydrocarbon radicals R5 to R7 represent independent to each other radicals with 4 to 18 C-atoms, preferably 4 to 12 C-atoms, whereby these radicals can be linear or twinned, saturated or unsaturated, and where X represents an anion. The rule is valid herein that the compounds (a) are different from the compounds (b) and, moreover, the further rule is valid herein, that triglyceride used show the acid value till 4 mg KOH/g.

### Detailed description of the invention

To eliminate the above mentioned disadvantages, a method according to the present invention as defined in the claims is used for biodiesel production from waste oils and fats, especially waste fats of animal origin. The method lies in reesterification of fats and oils under alkali conditions and subsequent separation of the biodiesel phase from the glycerin phase. The essence of the invention is the use of an organic base or a mixture of organic bases for the creation of alkali conditions and as catalyst for alcoholysis.

Suitable organic base/bases is/are a mixture/s of an amine with boiling point at standard pressure up to 200°C with tetramethylammonium hydroxide (TMAH). It particularly concerns amines from the group comprising isopropylamine, diisopropylamine, dimethyl- or diethylamine, n-butylamine and cyclohexylamine. TMAH can be partly replaced with an alkali hydroxide.

The amine or a mixture of amines is preferably dosed in the amount from 1 to 8 weight percent related to the weight of the input oil or fat, in dependence of the free acid content.

The amine or a mixture of amines entering the process to create alkali environment and to catalyze the reesterification reaction, can be partly replaced with a condensate containing a recycled amine from the preceding methanolysis.

In comparison with the existing methods, the main asset of the method according to the present invention is elimination of separated esterification of free fatty acids, because these are esterified directly by TMAH resulting in the formation of the respective methyl esters and elimination of undesirable side products. This allows processing of waste fats and oils of low quality.

Esterification with the use of strong organic bases under strong alkali non-aqueous conditions runs for example in case of TMAH according to the following mechanism:

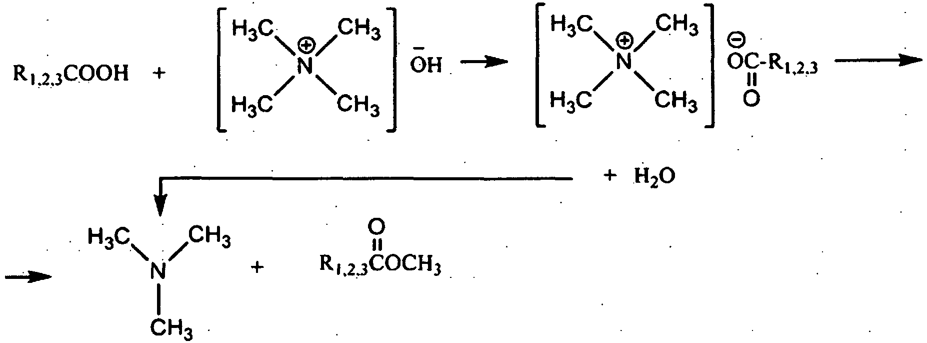

Another significant advantage lies in the fact that after the removal of the excess methyl or ethyl alcohol, the excess organic base is removed as well, specifically its alcoholic solution, and is re-used in esterification or in the following reesterification reaction. This considerably reduces the expenses on the input organic bases. A part of TMAH present in the glycerin phase decomposes during thermal processing of the G-phase into alcohol and gaseous trimethylamine which can be used for TMAH production. The result of the above mentioned facts is that no neutralization of the organic base has to be carried out; therefore the obtained glycerin does not contain any inorganic salts and meets high quality standards. The said assets of the invention are also applicable in cases when high quality vegetable oils are used as the input feedstock; there is no need to carry out the demanding neutralization of the inorganic alkali, the respective salts of which pass from major part into the glycerin phase. The entire process then represents a waste-free technology.

In some cases, particularly for economic reasons, the organic base can be combined with alkali hydroxides; however, the amount of the hydroxides is considerably lower and thereby also the content of inorganic salts in the final products. Waste fats generated in tanneries during the processing of raw hide into leather are of inferior quality as a feedstock for biodiesel production. In this case, the waste tannery fat is submitted to a refining process which is based on zonal melting controlled by programmed heating. This process gives refined fats with considerably decreased ash content, completely removed moisture and partly reduced acid number. The refinery residue can be pyrolyzed as a source of hydrocarbon mixtures.

### Examples

### Example 1:

In the example embodiment, waste fat from a tannery was used as the input feedstock of inferior quality from the point of view of existing technologies. The input feedstock was submitted to analysis with the following results:

| | |
|---|---|
| volatile substances weight percent at 103°C) | 27 |
| nitrogen (Kjeldahl method) (weight percent) | 1.5 |
| melting point (°C) | 34 |
| ash (weight percent) | 1.5 |
| saponification value (mg KOH/g of the sample) | 129 |
| acid number (mg KOH/g of the sample) | 13 |

All related to dry matter of the sample.

The said feedstock was then submitted to the refining process based on zonal melting controlled by programmed heating, and after analysis the following values were obtained:

| | |
|---|---|
| volatile substances (weight percent at 103°C) | undetected |
| nitrogen (Kjeldahl method) (weight percent) | undetected |
| melting point (°C) | 20 |
| ash (weight percent) | 0.1 |
| saponification value (mg KOH/g of the sample) | 181 |
| acid number (mg KOH/g of the sample) | 9 |

Reesterification of the refined fat was carried out with methanol and catalyzed by a mixture of n-butylamine and tetramethylammonium hydroxide (TMAH).
The reaction conditions were the following:

| composition of the reaction blend: | | |
|---|---|---|
| | refined fat (g) | 1000 |
| | methanol (g) | 1000 |
| | n-butylamine (g) | 20 |
| | TMAH (g) | 20 |
| reaction temperature (°C) | | 66 |
| reaction time (h) | | 5 |

After termination of the reaction the reaction blend was distilled (at 67°C) and 882 g of methanol was obtained - the difference of 118 g corresponds to practically 100% conversion during reesterification. After subsequent increase of melting point of the reaction blend (78°C), 15 g of regenerated n-butylamine were obtained. After separation of the glycerin layer, the obtained biodiesel was submitted to chromatographic analysis with the following results (in weight percent):

| | |
|---|---|
| palmitic acid methyl ester | 36 |
| stearic acid methyl ester | 10 |
| oleic acid methyl ester | 44 |
| residue (lower esters of fatty acids C₈-C₁₄) | 10 |

### Example 2

N-butylamine was replaced with cyclohexylamine with analogical results.

### Example 3:

500 g of waste frying oil with acid number of 10 mg KOH/ g of oil was mixed with 15 g of 100% isopropylamine and 500 g of methyl alcohol, and 40 g of 25% TMAH solution was added. The reaction blend was boiled at boiling point of 65°C for 5 hours. After termination of the reaction, the excess methyl alcohol was distilled off and a separated layer of crude biodiesel was obtained.

### Example 4: (comparative example)

500 g of refined waste tannery fat was mixed with 500 g of 0.5% KOH solution in methanol and 40 g of cyclohexylamine. The reaction blend was boiled at 68°C for 4 hours. After termination of the reaction, the excess methyl alcohol was distilled off and the biodiesel phase was obtained by separation from the glycerin layer. If the same process was carried out with an increased portion of KOH (2% solution in methanol) but without the addition of cyclohexylamine, the glycerin layer did not separate from the biodiesel phase.

## Claims

1. A method for biodiesel production from fats and oils, including waste fats and oils, that lies in reesterification of fats and oils under alkali conditions and the subsequent separation of the biodiesel phase from the glycerin phase, wherein a mixture of organic bases comprising an amine or amines with boiling point at standard pressure up to 200°C and tetramethylammonium hydroxide (TMAH) is used for the creation of alkali conditions and as catalysts for alcoholysis.

2. The process according to claim 1, wherein at least one amine is used from the group comprising isopropylamine, diisopropylamine, dimethyl- or diethylamine, n-butylamine and cyclohexylamine.

3. The process according to claim 2, wherein the amine, or the mixture of amines, are dosed together with TMAH in the amount from 1 to 8 weight percent, related to the weight of the input feedstock.

4. The process according to claims 2 and 3, wherein the amine, or the mixture of amines, used for creation of alkali environment and as a catalysts for alcoholysis, is partly replaced with a condensate containing an amine recycled from the preceding alcoholytic reaction.

5. The process according to claim 1, wherein the input feedstock of inferior quality such as waste animal fats from tanneries are treated by the refining process based on zonal melting controlled by programmed heating before the reesterification reaction in the organic base environment takes place.

6. The process according to claim 1, wherein in waste oil- or fat-based input feedstock containing free fatty acids (FFA), especially if the FFA content exceeds the limiting acid number, possibly if the input feedstock are saturated or unsaturated FFA, a pre-alcoholysis treatment is applied by esterification of FFA with the use of a mixture of organic bases.

7. The process according to claim 6, wherein the mixture of organic bases containing at least one of the amines from the group comprising isopropylamine, diisopropylamine, dimethyl- or diethylamine, n-butylamine and cyclohexylamine and other related organic bases such as TMAH.

8. The process according to claim 6, wherein for the identification of the esterification reaction in relation with its automatic control system, continuous monitoring of the amount of formed trimethylamine, possibly ammonia, is used.

## Patentansprüche

1. Die Methode für die Herstellung von Biodiesel aus Fetten und Ölen sowie aus Fett- und Ölabfällen, die in der Wiederveresterung von Fetten und Ölen unter alkalischen Bedingungen und einer anschließenden Separierung der Biodieselphase von der Glyzerinphase besteht, **dadurch gekennzeichnet, dass** eine Mischung aus organischen Basen aus Amin oder Aminen am Siedepunkt bei einem Standarddruck bis zu 200°C und Tetramethylammoniumhyddoxid (TMAH) verwendet wird, um eine laugenhaltige Umgebung zu bilden und als Katalysatoren für die Alkoholyse zu dienen.

2. Die Methode nach dem Anspruch 1, **dadurch gekennzeichnet, dass** mindestens ein Amin aus der Gruppe zu der Isopropylamin, Diisopropylamin, Dimethyl oder Diethylamin, n-Butylamin und Cyclohexylamin gehören, verwendet wird.

3. Die Methode nach dem Anspruch 2, **dadurch gekennzeichnet, dass** ein Amin oder eine Mischung aus Aminen zusammen mit TMAH in einer Menge von 1 bis 8 Gewichtsprozenten bezogen auf das Gewicht des eingehenden Rohstoffes dosiert wird.

4. Die Methode nach dem Anspruch 2 und 3, **dadurch gekennzeichnet, dass** das Amin oder die Mischung aus Aminen, die für die Herstellung einer alkalischen Umgebung und als Katalysator für die Alkoholyse verwendet werden, teilweise durch ein Kondensat, das ein Amin enthält, welches aus der vorhergehenden Alkolholyse-Reaktion recycelt wurde, ersetzt wird.

5. Die Methode nach dem Anspruch **1, dadurch gekennzeichnet, dass** der eingehende Rohstoff, der von minderer Qualität ist, z. B. Abfälle von tierischen Fetten aus Gerbereien, in einem Raffinationsverfahren auf der Basis eines mit programmierter Erwärmung gesteuerten Flächenschmelzens behandelt wird, bevor die Wiederveresterungsreaktion im organisch basierten Milieu stattfindet.

6. Die Methode nach dem Anspruch **1, dadurch gekennzeichnet, dass** der eingehende Rohstoff aus Altöl oder Altfett mit freien Fettsäuren (FFS) besteht, insbesondere wenn der FFS-Gehalt eine Limit-Säurezahl übersteigt, weil möglicherweise der eingehende Rohstoff gesättigte oder ungesättigte FFS enthält, wird eine Vor-Alkoholyse durch Veresterung der FFS mit Hilfe der Mischung aus organischen Basen durchgeführt.

7. Die Methode nach dem Anspruch 6, **dadurch gekennzeichnet, dass** die Mischung aus organischen Basen mindestens eines der Amine aus der Gruppe mit Isopropylamin, Diisopropylamin, Dimetyl oder Diethylamin, n-Butylamin und Cyclohexylamin und anderen betreffenden organischen Basen wie TMAH enthält.

8. Die Methode nach dem Anspruch 6, **dadurch gekennzeichnet, dass** um zu identifizieren die Veresterungsreaktion im Zusammenhang mit einem automatischen Steuerungssystem, eine kontinuierliche Überwachung der Menge des gebildeten Trimethylamins, möglicherweise Ammoniaks, benutzt wird.

## Revendications

1. Procédé de production de biodiesel à partir de graisses et d'huiles, y compris des graisses et huiles usées, reposant sur la réestérification des graisses et des huiles dans des conditions alcalines, et la séparation subséquente de la phase biodiesel et de la phase glycérine, cara **ctérisé en ce** un où un mélange de bases organiques comprenant une amine ou des amines dont le point d'ébullition à pression normale peut atteindre 200°C, et de l'hydroxyde de tétraméthylammonium (TMAH), sont utilisés pour créer les conditions alcalines et comme catalyseur d'alcoolyse.

2. Procédé selon la revendication 1 **dans lequel** où au moins une amine est utilisée parmi le groupe comprenant isopropylamine, diisopropylamine, diméthyl- ou diéthylamine, n-butylamine et cyclohexylamine.

3. Procédé selon la revendication 2 **dans lequel 1** où une amine, ou un mélange d'amines, sont dosées ensemble avec TMAH en proportion de 1 à 8 pourcents du poids, selon le poids de matière première entrante.

4. Procédé selon les revendications 2 et 3, **dans lequel** où l'amine, ou le mélange d'amines, utilisées pour la création d'un environnement alcalin et en tant que catalyseur pour l'alcoolyse, sont en partie remplacées par un condensat contenant une amine recyclée à partir de la réaction alcoolytique précédente.

5. Procédé selon la revendication 1 **dans lequel** où les matières premières entrantes de qualité inférieure, telles que les graisses animales usées provenant des tanneries, sont traitées par un processus de raffinage basé sur des fusions de zone contrôlées par chauffage programmé avant que la réaction de réestérification ne se déroule dans un environnement basique organique.

6. Procédé selon la revendication 1 **dans lequel** où les matières premières, basées sur l'huile usée ou la graisse usée, contiennent des acides gras libres (FFA), particulièrement si la teneur en FFA dépasse l'indice d'acide limitant, éventuellement si les matières premières entrantes sont des FFA saturés ou insaturés, et où un traitement pré-alcoolyse est appliqué par estérification du FFA avec utilisation d'un mélange de bases organiques.

7. Procédé selon la revendication 6 **dans lequel** où le mélange de bases organiques contient au moins l'une des amines du groupe comprenant isopropylamine, diisopropylamine, diméthyl- ou diéthylamine, n-butylamine et cyclohexylamine et autres bases organiques associées comme TMAH.

8. Procédé selon la revendication 6 **dans lequel** où le suivi continu de la quantité de triméthylamine formée, éventuellement de l'ammoniaque, est utilisé pour l'identification de la réaction d'estérification en relation avec son système de contrôle automatique.
